# EUROPEAN PATENT APPLICATION

(11) **EP 3 315 836 A1**
(43) Date of publication of application: **02.05.2018**
(21) Application number: 17198894.2
(22) Date of filing: 27.10.2017
(51) Int. Cl.: F16K 5/06

(54) **VALVE ASSEMBLY WITH ANTI-EXTRUSION VALVE SEAT**

(30) Priority: 31.10.2016 US 201615339661
(71) Applicant: Johnson Controls Technology Company, Milwaukee, WI 53209 (US)
(72) Inventor: FREIMUTH, Duane S., Franklin, WI Wisconsin 53231 (US); BIANCHETTI, Claudio, 25064 Gussago Brescia (IT)
(74) Representative: Trinks, Ole

(57) **Abstract**

A valve assembly includes a body, a ball, a first seating assembly, and a second seating assembly. The body includes an inlet, an outlet, and an inner chamber. The ball is positioned within the inner chamber. The ball includes a bore extending through the ball such that the ball is movable from a closed position and an open position. The ball prevents fluid flow from flowing between the inlet and the outlet in the closed position. The ball enables fluid flow between the inlet and the outlet in the open position. The first seating assembly is positioned adjacent the inlet. The second seating assembly is positioned adjacent the outlet.

## Description

### CROSS-REFERENCE TO RELATED PATENT APPLICATION

This application claims the benefit of and priority to U.S. Patent Application No. 15/339,661 filed October 31, 2016.

### BACKGROUND

The present disclosure relates generally to valve assemblies including valve seals and seats for ball valves. More particularly, the present disclosure relates to valve seals and seats for a ball valve that are designed to prevent extrusion of a seal within the ball valve.

A valve seat (e.g., valve seal, etc.) is, in general, used to establish a seal between components in a fluid transfer assembly. For example, valve seats are typically utilized between the ball and body of a ball valve in a fluid piping system. Typically, valve seats are standard O-rings that are sandwiched in an interface between a ball and a body of a ball valve. During operation of the ball valve, it is possible for the valve seat to become dislodged from the interface and to protrude into an interior portion of the ball valve. In these cases, the protruding valve seat may impede movement of the ball or may be damaged through unintended interaction with the ball. When such events occur, the ball valve may not operate as intended and fluid may leak through the interface.

### BRIEF DESCRIPTION OF THE DRAWINGS

FIG. 1 is a side view of a valve assembly, according to an exemplary embodiment;
FIG. 2 is a cross-sectional view of the valve assembly shown in FIG. 1 in a first configuration;
FIG. 3 is a cross-sectional view of the valve assembly connected to a pair of couplings;
FIG. 4 is a detailed view of the cross-sectional view shown in FIG. 2;
FIG. 5 is a detailed view of the cross-sectional view shown in FIG. 4;
FIG. 6 is a top perspective view of an annular retaining member for use in a valve assembly, such as the valve assembly shown in FIG. 1, according to an exemplary embodiment;
FIG. 7 is a top view of the annular retaining member shown in FIG. 6;
FIG. 8 is a bottom view of the annular retaining member shown in FIG. 6;
FIG. 9 is a right view of the annular retaining member shown in FIG. 6;
FIG. 10 is a left view of the annular retaining member shown in FIG. 6;
FIG. 11 is a front side view of the annular retaining member shown in FIG. 6;
FIG. 12 is a rear side view of the annular retaining member shown in FIG. 6;
FIG. 13 is a cross-sectional view of the annular retaining member shown in FIG. 6;
FIG. 14 is a cross-sectional view of the valve assembly shown in FIG. 1 in a second configuration;
FIG. 15 is a detailed view of the cross-sectional view shown in FIG. 14, in a first configuration;
FIG. 16 is a detailed view of the cross-sectional view shown in FIG. 14, in a second configuration;
FIG. 17 is a front perspective view of an annular seat for use in a valve assembly, such as the valve assembly shown in FIG. 15, according to an exemplary embodiment;
FIG. 18 is a rear perspective view of the annular seat shown in FIG. 17;
FIG. 19 is a cross-sectional view of the annular seat shown in FIG. 17;
FIG. 20 is a front perspective view of an annular seat for use in a valve assembly, such as the valve assembly shown in FIG. 16, according to an exemplary embodiment;
FIG. 21 is a rear perspective view of the annular seat shown in FIG. 20; and
FIG. 22 is a cross-sectional view of the annular seat shown in FIG. 20.

### DETAILED DESCRIPTION

### Overview

Referring generally to the FIGURES, a valve assembly is shown, according to various exemplary embodiments. The valve assembly described herein may be used with various fluid systems and components such as heating, ventilation, and air conditioning systems as well as other fluid transfer systems in building management systems. The valve assembly described herein includes various components for preventing extrusion of an O-ring or other seal or seat, positioned between a ball and a shoulder, into a flow path of the valve assembly. In traditional valve assemblies, O-rings are typically located between a ball and a valve body. However, these O-rings are prone to extruding into a flow path of the valve assembly when the ball is rotated. When extrusion occurs, the O-ring may become compromised and the valve assembly may not perform in a desirable manner which may lead to maintenance or replacement of the valve assembly.

The valve assembly described herein is intended to prevent extrusion of the O-ring through a variety of mechanisms. In one configuration, the valve assembly utilizes an annular retaining member which includes an outer retaining ring and an inner surface. In this configuration, the annular retaining member cooperates with an annular seal to maintain a position of the O-ring between the annular seal and a valve body, thus preventing extrusion of the O-ring. In another configuration, the valve assembly utilizes an annular seat which includes a groove that interfaces with a projection in a valve body. In this configuration, the annular seat and the valve body cooperate to maintain a position of the O-ring between the annular seat and a valve body, thus preventing extrusion of the O-ring.

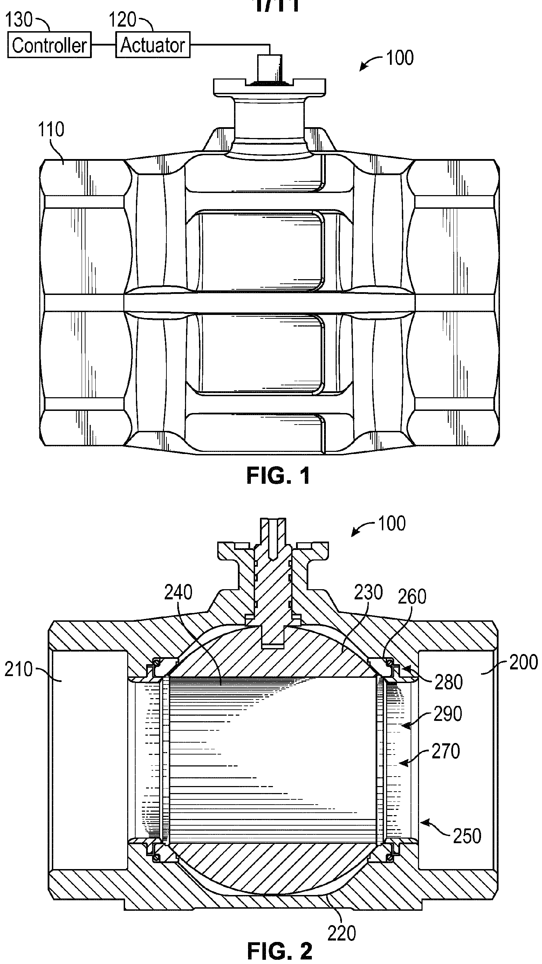

As shown in FIGS. 1-5, an assembly, shown as valve assembly 100, includes a body, shown as body 110. Valve assembly 100 may be used to control the flow of fluid (e.g., liquid, gas, etc.) in a network (e.g., pipe network, fluid network, control network, etc.). Valve assembly 100 is operable between an open state and a closed state. In the open state, fluid flows through valve assembly 100 at a maximum flow rate. In the closed state, fluid does not flow through valve assembly 100. In this way, valve assembly 100 may be utilized to selectively provide a desired amount of fluid. According to various embodiments, valve assembly 100 is communicable with a device (e.g., solenoid, electronic actuator, pneumatic actuator, hydraulic actuator, etc.), shown as actuator 120. Actuator 120 may be, for example, a solenoid, a linear actuator, or any other actuating device. As shown in FIG. 1, actuator 120 is coupled to a controller, shown as controller 130. Controller 130 is configured to control actuator 120. For example, controller 130 may send control signals to actuator 120 to selectively open or close valve assembly 100. In some embodiments, controller 130 receives commands from a server, computer, or other management system (e.g., building management system, etc.). Alternatively, valve assembly 100 may be manually controlled. For example, valve assembly 100 may be controlled by the turning of a wheel, handle, post, or knob.

Referring to FIG. 2, body 110 includes an inlet or outlet, shown as inlet 200, and an inlet or outlet, shown as outlet 210. It is understood that fluid may flow various directions through valve assembly 100 and that therefore inlet 200 and outlet 210 may transmit or receive fluid as necessary. Upstream and downstream directions may be defined relative to inlet 200 and outlet 210. Body 110 also includes a chamber, shown as inner chamber 220. Inner chamber 220 is configured to receive a ball, shown as ball 230. Ball 230 is configured to rotate within inner chamber 220. Ball 230 is configured to be rotated within body 110 to selectively adjust the flow of fluid through valve assembly 100. Ball 230 includes a bore, shown as bore 240. Bore 240 may be sized to provide an amount of flow (e.g., a mass flow rate, a volumetric flow rate, etc.) that may pass through bore 240 in a target amount of time (e.g., liters per minute, gallons per minute, etc.). Bore 240 cooperates with body 110 to define a fluid passageway for valve assembly 100. Ball 230 is moveable between an open position, where ball enables fluid flow from inlet 200 to outlet 210, and a closed position, where ball prevents fluid flow from inlet 200 to outlet 210. In some embodiments, ball 230 is positionable at any position between the open and closed position to enable continuous modulation of the flow through the valve assembly 100. According to various embodiments, bore 240 is constructed such that when ball 230 is rotated, the fluid pathway through body 110 is progressively opened or closed.

Bore 240 may be selected based on a desired flow rate of valve assembly 100. According to various embodiments bore 240 is circular. However, in other applications the bore 240 may be elliptical, hexagonal, rectangular, or otherwise polygonal. Similarly, it is understood that ball 230 may be various shapes and be of various sizes and materials. For example, ball 230 may be circular and constructed from brass. In other examples, ball 230 may be constructed from stainless steel.

According to an exemplary embodiment, valve assembly 100 includes a seating assembly (e.g., sealing assembly etc.), shown as seating assembly 250. Seating assembly 250 is positioned between body 110 and ball 230. Seating assembly 250 is configured to substantially prevent fluid flow from entering inner chamber 220 between ball 230 and body 110. Seating assembly 250 includes a first seal (e.g., gasket, O-ring, etc.), shown as annular seal 260, and a retaining member, shown as annular retaining member 270. Annular seal 260 and annular retaining member 270 interface to form seating assembly 250. Annular retaining member 270 includes a first portion, shown as outer retaining ring 280, and a second portion, shown as inner retaining ring 290. Outer retaining ring 280 is located between annular seal 260 and body 110. Inner retaining ring 290 interfaces with fluid in valve assembly 100. When fluid transfer through valve assembly 100 is enabled, inner retaining ring 290 is configured to cooperate with bore 240 to provide a fluid channel. Inner retaining ring 290 may be thought of as an annular retaining band that extends generally perpendicularly relative to outer retaining ring 280. In some applications, annular retaining member 270 is generally T-shaped. For example, outer retaining ring 280 and inner retaining ring 290 may intersect to form a generally T-shaped structure. According to various embodiments, valve assembly 100 includes two annular retaining members 270 on opposite sides of ball 230. In these embodiments, inner retaining rings 290 are substantially aligned.

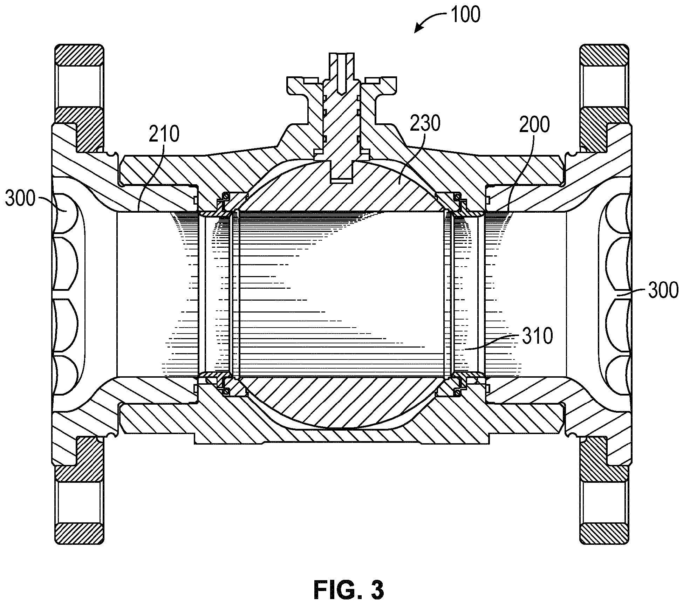

As shown in FIG. 3, valve assembly 100 may be connected to a coupling (e.g., fitting, connector, etc.), shown as coupling 300. Coupling 300 connects to valve assembly 100 through inlet 200 and/or outlet 210. Coupling 300 may interface with inlet 200 and/or outlet 210 to prevent undesirable leakage of fluid out of valve assembly 100. For example, coupling 300 may contain a male threaded interface that is configured to interface with a matching female threaded interface in inlet 200. According to various embodiments, annular retaining member 270 and body 110 define a space, shown as annular space 310. Annular space 310 may be located proximate inlet 200 and proximate outlet 210 such that two annular spaces 310 are present. Retaining member 270 is in some embodiments configured to define a portion of the fluid flow path between bore 240 and one or more couplings 300 and define one or more smooth transitional surfaces.

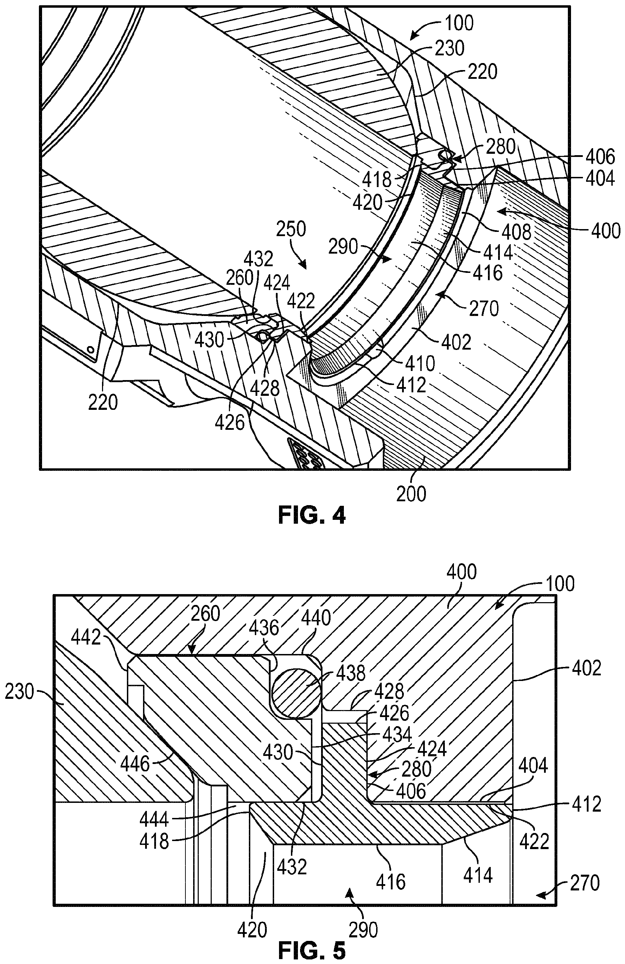

Referring specifically to FIG. 4, body 110 is shown to include a shoulder (e.g., wall, flange, etc.), shown as shoulder 400. Shoulder 400 is configured to interface with annular retaining member 270. Shoulder 400 may be configured based on ball 230. For example, the shape of bore 240 may define a shape of shoulder 400. Shoulder 400 may be defined by a thickness. The thickness of shoulder 400 may, in part, define the ability of annular retaining member 270 to prevent leakage of fluid into inner chamber 220. Annular seal 260 is configured to provide a flexible interface between ball 230, body 110, and shoulder 400. Shoulder 400 defines a boundary of inner chamber 220.

Shoulder 400 includes a first face, shown as first face 402, a second face, shown as second face 404, and a third face, shown as third face 406. In one embodiment, first face 402 is located proximate inlet 200 and does not contact annular retaining member 270. Second face 404 is located adjacent first face 402. Third face 406 is located proximate ball 230 and opposite first face 402. In various embodiments, shoulder 400 includes an edge, shown as exterior edge 408, between first face 402 and second face 404. According to some embodiments, exterior edge 408 is beveled. In an exemplary embodiment, exterior edge 408 includes a recess, shown as recess 410. Recess 410 may extend through first face 402 and second face 404. In an alternative embodiment, recess 410 extends through third face 406.

Second face 404 may be larger or smaller depending on the configuration of shoulder 400. In some alternative applications, second face 404 includes protrusions (e.g., protuberances, ribs, ridges, features, etc.) that are configured to interface with annular retaining member 270 to maintain a position (e.g., resist movement, etc.) of annular retaining member 270. These protrusions may be configured to be received in corresponding recessions in annular retaining member 270. Similarly, annular retaining member 270 may include protrusions (e.g., protuberances, ribs, ridges, features, etc.) that are configured to be received in recessions in second face 404. Alternatively, annular retaining member 270 may be adhesively attached to second face 404.

According to various embodiments, inner retaining ring 290 includes a first edge, shown as front edge 412. Front edge 412 may contact second face 404 of shoulder 400 or exterior edge 408 of shoulder 400. In some embodiments, inner retaining ring 290 also includes a first face, shown as first tapered portion 414. First tapered portion 414 is adjacent front edge 412. First tapered portion 414 may extend into a third face (e.g., cylindrical surface, etc.), shown as cylindrical portion 416. Cylindrical portion 416 may be substantially parallel to second face 404 of shoulder 400. In one embodiment, cylindrical portion 416 is coaxial with bore 240. Inner retaining ring 290 also includes a second edge, shown as rear edge 418. Rear edge 418 may contact annular seal 260. In some embodiments, inner retaining ring 290 includes a fourth face, shown as second tapered portion 420. Second tapered portion 420 may extend from rear edge 418 to cylindrical portion 416. In some alternative embodiments, inner retaining ring 290 does not include first tapered portion 414 or second tapered portion 420 and cylindrical portion 416 is adjacent both front edge 412 and rear edge 418.

According to an exemplary embodiment, outer retaining ring 280 includes a first surface, shown as front surface 422. Front surface 422 is adjacent front edge 412. Front surface 422 is configured to interface with second surface 404 of shoulder 400. Outer retaining ring 280 also includes a second surface, shown as shoulder surface 424. Shoulder surface 424 is adjacent front surface 422. Shoulder surface 424 is configured to interface with third face 406. In some embodiments, shoulder surface 424 is substantially orthogonal to front surface 422. Outer retaining ring 280 also includes a third surface, shown as annular edge 426. Annular edge 426 is adjacent shoulder surface 424. Annular edge 426 may be substantially orthogonal to shoulder surface 424. According to various embodiments, annular edge 426 is configured to be received in a recess in body 110, shown as retaining ring recess 428. Retaining ring recess 428 is adjacent third face 406 of shoulder 400. Annular edge 426 is configured to interface with retaining ring recess 428. Outer retaining ring 280 also includes a fourth surface, shown as seal surface 430. Seal surface 430 is adjacent to annular edge 426. In one embodiment, seal surface 430 is substantially parallel to shoulder surface 424. Seal surface 430 is configured to interface with annular seal 260. Outer retaining ring 280 also includes a fifth surface, shown as rear surface 432. Rear surface 432 is adjacent seal surface 430 and rear edge 418. Rear surface 432 may be substantially parallel to front surface 422.

According to various embodiments, annular seal 260 includes a face, shown as first face 434. First face 434 is configured to interface with seal surface 430 of outer retaining ring 280. Annular seal 260 also includes a recess, shown as receiving recess 436. Receiving recess 436 is positioned adjacent first face 434. Receiving recess 436 is configured to receive a seal, shown as O-ring 438. Receiving recess 436 cooperates with a recess in shoulder 400, shown as seal recess 440, to constrain O-ring 438 between annular seal 260 and body 110. In some embodiments, annular seal 260 further includes a first protrusion (e.g., protuberance, etc.), shown as first seal edge 442, a second protrusion (e.g., protuberance, etc.), shown as second seal edge 444, and a surface therebetween, shown as ball surface 446.

O-ring 438 is configured to interface with body 110, shoulder 400, and annular seal 260 to inhibit flow of fluid between ball 230 and body 110 into inner chamber 220. According to various embodiments, O-ring 438 is configured to be biased against body 110 by annular seal 260 through an interaction with seal recess 440. Annular retaining member 270 is configured to prevent extrusion of O-ring 438 into a flow path of fluid. For example, annular retaining member 270 is configured to prevent extrusion of O-ring 438 between annular seal 260 and body 110. In an exemplary operation, fluid flows through ball 230, over annular seal 260, and over annular retaining member 270 when ball 230 is in the open position.

In operation, ball 230 may contact first seal edge 442, second seal edge 444, and/or ball surface 446. First seal edge 442 may provide a seal with ball 230 and body 110 such that fluid does not pass between first seal edge 442 and ball 230. Ball surface 446 is configured to interface with ball 230 along various points of ball surface 446 as ball 230 is rotated. For example, ball surface 446 may provide a seal with ball 230 such that fluid does not pass between ball surface 446 and ball 230. Second seal edge 444 is configured to interface with annular retaining member 270. In some embodiments, second seal edge 444 and annular retaining member 270 cooperate such that no fluid passes between second seal edge 444 and annular retaining member 270. According to various embodiments, second seal edge 444 is configured to interface with rear surface 432 and body 110.

First seal edge 442 and second seal edge 444 may provide increased structural integrity to annular seal 260. According to an exemplary embodiment, annular seal 260 is configured to provide a sealing pressure on ball 230. The sealing pressure may be related to the area of ball surface 446 (i.e., the area of annular seal 260 in contact with ball 230) and the material of annular seal 260. For example, a firmer material (e.g., less resilient material, etc.) for annular seal 260 may facilitate a greater sealing pressure on ball 230. According to an exemplary embodiment, first seal edge 442 and second seal edge 444 are configured to be beveled. However, first seal edge 442 and second seal edge 444 may be chamfered, filleted, or rounded.

First tapered portion 414 is configured to gradually transition a flow between a coupler (e.g., pipe, fitting, hose, etc.) and cylindrical portion 416. Similarly, cylindrical portion 416 may be configured to gradually transition a flow to bore 240. Front edge 412 is configured to provide structural support to first tapered portion 414 and rear edge 418 is configured to provide structural support to second tapered portion 420. In many applications, front edge 412 and rear edge 418 are rounded, chamfered, or filleted.

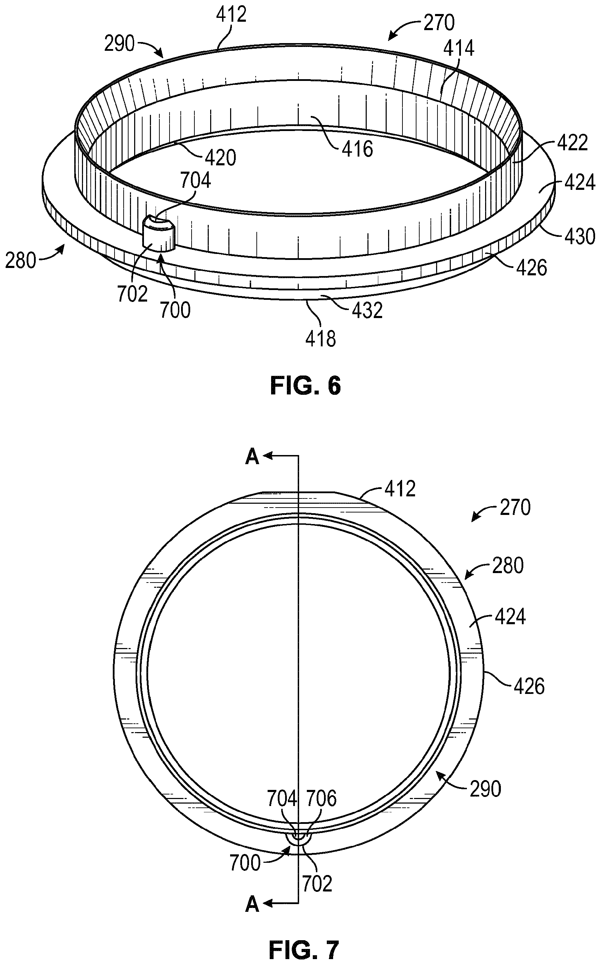

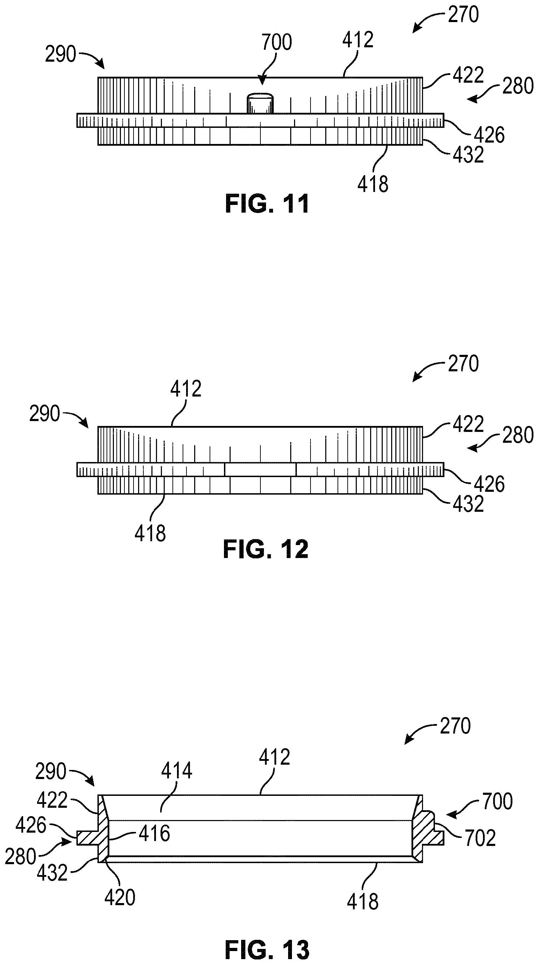

Referring to FIGS. 6-13, annular retaining member 270 further includes a protrusion (e.g., protuberance, etc.), shown as rotational lock 700. Rotational lock 700 is configured to interact with recess 410 to inhibit rotation of annular retaining member 270. Rotational lock 700 includes a first surface (e.g., face, etc.), shown as outer surface 702, a second surface (e.g., face, etc.), shown as axial face 704, and a third surface (e.g., face, etc.), shown as adjoining surface 706. According to various embodiments, outer surface 702 is configured to interface with recess 410. The configuration of outer surface 702 (e.g., the shape, contour, etc.), may be altered according to the corresponding configuration of recess 410. According to various embodiments, axial face 704 is hidden in recess 410 when annular retaining member 270 is installed in valve assembly 100. Similar to outer surface 702, the shape and size of axial face 704 may be altered according to the configuration of recess 410. Adjoining surface 706 is configured to join outer surface 702 and axial face 704. For example, adjoining surface 706 may be a chamfer, a fillet, or any other suitable adjoining surface.

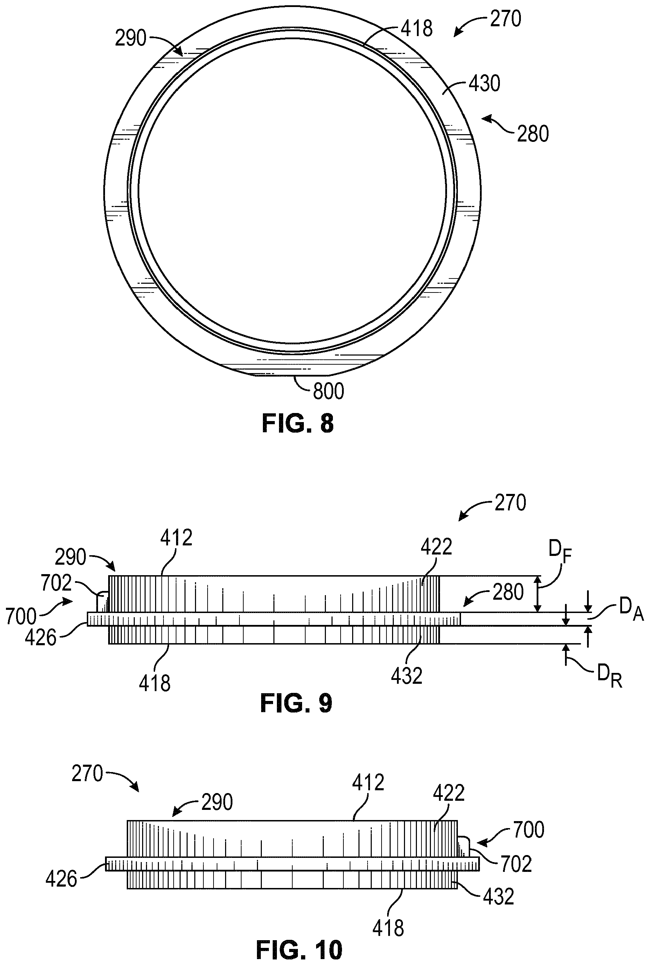

Referring now to FIG. 8, annular retaining member 270 further includes a depression, shown as depression 800. In other embodiments, annular retaining member 270 does not include depression 800. Depression 800 may be configured to assist rotational lock 700 in inhibiting rotation of annular retaining member 270. Depending on the configuration of the flange of the ball valve, depression 800 may be longer or shorter than as shown in FIG. 8.

As shown in FIG. 9, front surface 422 is defined by a length, shown as distance DF, annular edge 426 is defined by a distance, shown as distance DA, and rear surface 432 is defined by a distance, shown as distance DR. According to an exemplary embodiment, the length of front surface 422 is greater than the length of rear surface 432 which is greater than the length of annular edge 426. However, other variations are similarly possible. The length of front surface 422 may depend on shoulder 400. For example, for ball valves with thicker versions of shoulder 400 it may be desirable to increase the length of front surface 422.

Similarly, the length of rear surface 432 may depend on annular seal 260. For example, for ball valves with thinner annular seals 260, it is desirable to decrease the length of rear surface 432. Still further, depending on shoulder 400, it may be desirable to increase or decrease the length of annular edge 426 such that the length of annular edge 426 is substantially equal to a distance between the annular seal 260 and shoulder 400.

Body 110 may be coupled to various pipes, fittings, hoses, gauges, and other components in a fluid transfer assembly. For example, body 110 may be placed between two fluid transfer pipes and configured to selectively control the flow of fluid from one fluid transfer pipe to another fluid transfer pipe. Accordingly, body 110 may be altered and reconfigured depending on the fluid transfer assembly. For example, inlet 200 and/or outlet 210 may be threaded to receive a threaded fluid transfer pipe. Alternatively, inlet 200 and/or outlet 210 may be threaded to be received in a threaded fluid transfer pipe. Body 110 may be constructed from various materials such as brass, aluminum, stainless steel, plastic, polymers, metallic alloys, resilient materials, and other suitable materials. Body 110 may be assembled from several different pieces. The pieces may be joined through the use of fasteners, adhesives, or through the use of a permanent bonding method such as welding, riveting, and fusing. Shoulder 400 may be constructed to be structurally integrated with body 110 or may be attached to body 110 through any of the methods and mechanisms previously mentioned.

Annular seal 260, O-ring 438, and annular retaining member 270 may be constructed from various materials suitable for use in a fluid transfer assembly. For example, annular seal 260, O-ring 438, and annular retaining member 270 may be constructed from butadiene rubber, butyl rubber, fluoroelastomer, nitrile rubber, silicon rubber, thermoplastics, synthetic rubbers, resilient materials, and other similar materials. In an alternative embodiment, annular seal 260, O-ring 438, and annular retaining member 270 are structurally integrated forming a single seal performing the various functions of annular seal 260, O-ring 438, and annular retaining member 270. In another alternative embodiment, any combination of annular seal 260, O-ring 438, and annular retaining member 270 may be structurally integrated. For example, O-ring 438 may be structurally integrated within annular seal 260. In another example, annular seal 260 and annular retaining member 270 may be structurally integrated. As described herein, structurally integrated indicates that two otherwise separate components, features, or structures are formed in, or otherwise caused to be, a single component, feature, or structure. For example, structural integration may be achieved through various molding processes (e.g., injection molding, extrusion molding, pressure molding, transfer molding, etc.).

It is understood that any of annular seal 260, O-ring 438, and annular retaining member 270 may be compressible (e.g., configured to be compressed). In this way, compression of annular seal 260, O-ring 438, and annular retaining member 270 may enhance the ability of annular seal 260, O-ring 438, and annular retaining member 270 to inhibit undesirable fluid flow (e.g., to inner chamber 220, etc.). Similarly, rotational lock 700 may be compressible such that rotational lock 700 is secured in recess 410. Alternatively, rotational lock 700 may be fused and/or adhesively attached to recess 410.

In some alternative embodiments, annular retaining member 270 includes several holes between shoulder surface 424 and seal surface 430. The holes may be designed to reduce cost of annular retaining member 270. In other alternative embodiments, annular retaining member 270 and shoulder 400 have more than one rotational lock 700 and recess 410. For example, annular retaining member 270 may have three different rotational locks 700. Similarly, annular retaining member 270 may not utilize rotational lock 700. In some alternative embodiments annular seal 260 and O-ring 438 may have a rotational lock similar to rotational lock 700 configured to interface with a recess similar to recess 410.

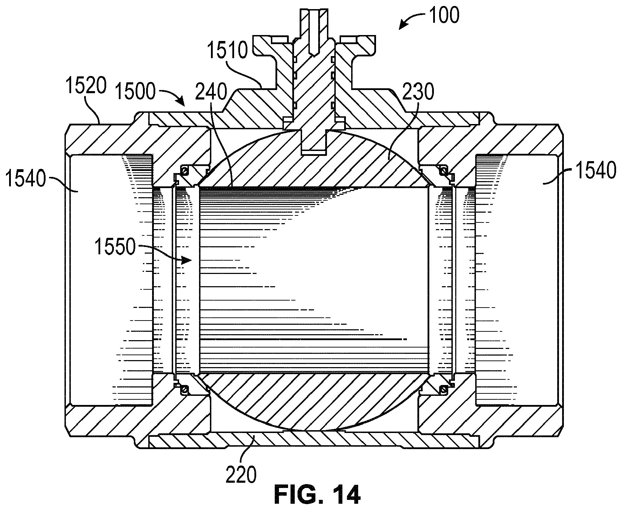

Referring now to FIGS. 14-16, valve assembly 100 is shown to include a different body, shown as body 1500, which includes a central portion, shown as main body 1510, and end portions, shown as end portions 1520. Main body 1510 receives two end portions 1520. Each end portion 1520 may independently receive coupling 300. For example, end portions 1520 may threadably receive end portions 1520. Body 1500 includes an inlet or outlet, shown as inlet 1530, and an inlet or outlet, shown as outlet 1540. Inlet 1530 and outlet 1540 are similar to inlet 200 and outlet 210 in that the previous description of inlet 200 and outlet 210 applies to inlet 1530 and outlet 1540, respectively.

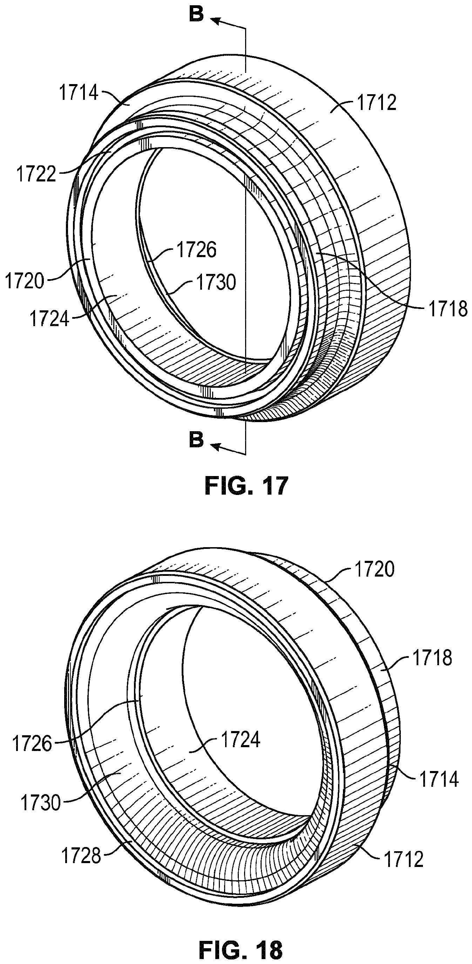

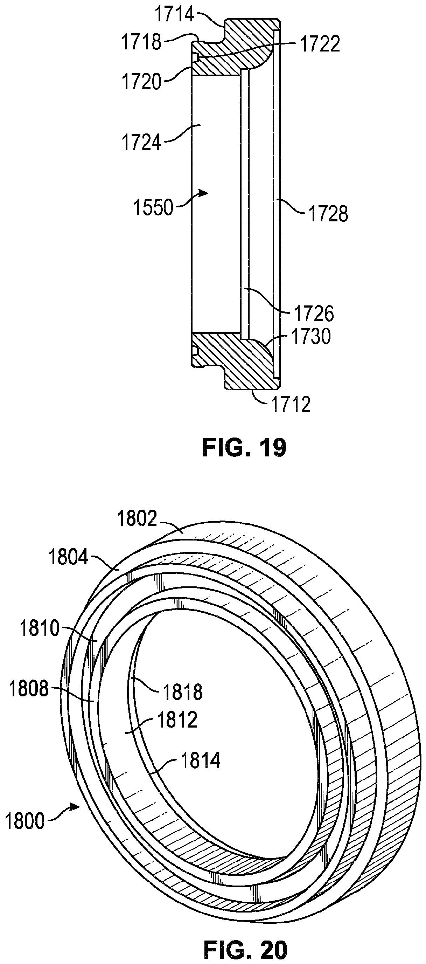

In FIGS. 14, 15, and 17-19, valve assembly 100 includes a seat (e.g., seal, gasket, O-ring, etc.), shown as annular seat 1550. Annular seat 1550 is positioned between end portion 1520 and ball 230. Annular seat 1550 is configured to substantially prevent fluid flow from entering inner chamber 220. When fluid transfer through valve assembly 100 is enabled, annular seat 1550 is configured to cooperate with bore 240 to provide a fluid channel.

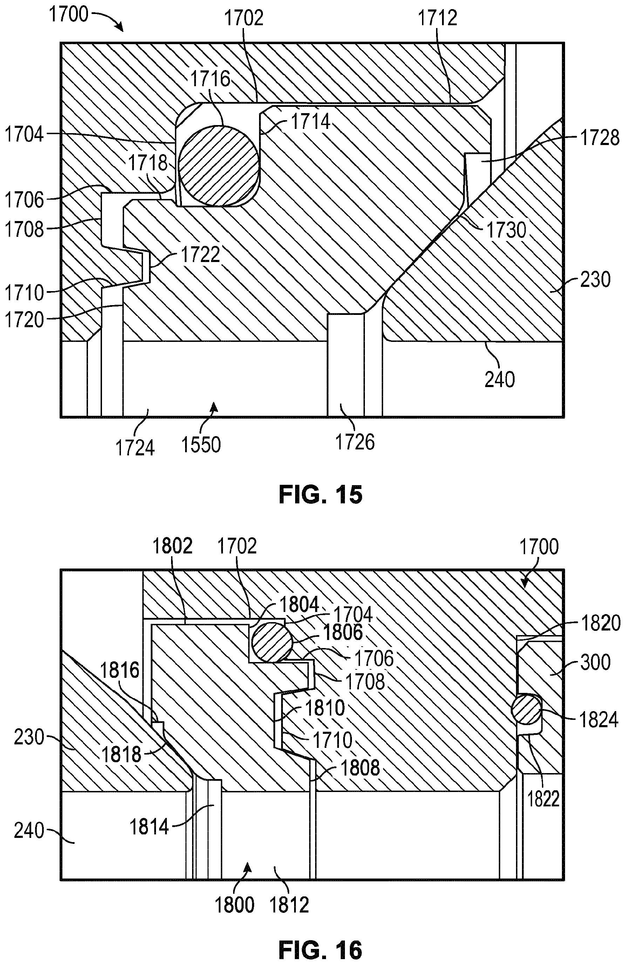

Referring specifically to FIG. 15, end portion 1520 is shown to include a shoulder (e.g., wall, flange, etc.), shown as annular shoulder 1700. Annular shoulder 1700 is configured to interface with annular seat 1550. Annular shoulder 1700 may be configured based on ball 230. For example, the shape of bore 240 may define a shape of annular shoulder 1700. Annular shoulder 1700 may be defined by a thickness. The thickness of annular shoulder 1700 may, in part, define the ability of annular seat 1550 to prevent leakage of fluid into inner chamber 220. Annular seat 1550 is configured to provide a flexible interface between ball 230, end portion 1520, and annular shoulder 1700. Annular shoulder 1700 defines a boundary of inner chamber 220.

Annular shoulder 1700 includes a first face, shown as first face 1702, a second face, shown as second face 1704, a third face, shown as third face 1706, a fourth face, shown as fourth face 1708, and a projection, shown as annular projection 1710, on fourth face 1708. First face 1702 of annular shoulder 1700 interfaces with a first face of annular seat 1550, shown as seat face 1712. Annular seat 1550 includes a recess, shown as receiving recess 1714. Receiving recess 1714 is configured to receive a seal, shown as O-ring 1716. Receiving recess 1714 cooperates with first face 1702 and second face 1704 of annular shoulder 1700 to constrain O-ring 1716 between annular seat 1550 and annular shoulder 1700.

O-ring 1716 is configured to interface with end portion 1520, annular shoulder 1700, and annular seat 1550 to inhibit flow of fluid between ball 230 and end portion 1520 into inner chamber 220. According to various embodiments, O-ring 1716 is configured to be biased against annular shoulder 1700 by annular seat 1550 through an interaction with receiving recess 1714. In an exemplary operation, fluid flows through ball 230, over annular seat 1550, and over end portion 1520 when ball 230 is in the open position.

Annular seat 1550 includes a second face, shown as second face 1718. Second face 1718 of annular seat 1550 interfaces with third face 1706 of annular shoulder 1700. Annular seat 1550 also includes a third face, shown as third face 1720. Third face 1720 of annular seat 1550 interfaces with fourth face 1708 of annular shoulder 1700. According to various embodiments, annular seat 1550 includes an annular groove, shown as annular groove 1722. Annular groove 1722 is configured to receive annular projection 1710 of annular shoulder 1700. Annular projection 1710 and annular groove 1722 may cooperate to maintain a position (e.g., resist movement, etc.) of annular seat 1550 relative to annular shoulder 1700. Annular groove 1722 may be shaped in various configurations to substantially match annular projection 1710.

In some alternative applications, annular seat 1550 includes protrusions (e.g., protuberances, ribs, ridges, features, etc.) that are configured to interface with annular shoulder 1700 to maintain a position (e.g., resist movement, etc.) of annular seat 1550. These protrusions may be configured to be received in corresponding recessions in annular shoulder 1700. Similarly, annular shoulder 1700 may include protrusions (e.g., protuberances, ribs, ridges, features, etc.) that are configured to be received in recessions in annular seat 1550. Alternatively, annular seat 1550 may be adhesively attached to annular shoulder 1700.

Annular seat 1550 further includes a fourth face, shown as inner surface 1724. Inner surface 1724 interfaces with fluid in valve assembly 100. According to various embodiments, annular seat 1550 includes a first protrusion (e.g., protuberance, etc.), shown as first seal edge 1726, a second protrusion (e.g., protuberance, etc.), shown as second seal edge 1728, and a surface therebetween, shown as ball surface 1730. Ball surface 1730 interfaces with ball 230. For example, as ball 230 rotates, ball 230 slides along ball surface 1730.

In operation, ball 230 may contact first seal edge 1726, second seal edge 1728, and ball surface 1730. First seal edge 1726 and second seal edge 1728 may provide a seal with ball 230 and end portion 1520 such that fluid does not pass between first seal edge 1726 or second seal edge 1728 and ball 230. Ball surface 1730 is configured to interface with ball 230 along various points of ball surface 1730 as ball 230 is rotated. For example, ball surface 1730 may provide a seal with ball 230 such that fluid does not pass between ball surface 1730 and ball 230.

First seal edge 1726 and second seal edge 1728 may provide increased structural integrity to annular seat 1550. According to an exemplary embodiment, annular seat 1550 is configured to provide a sealing pressure on ball 230. The sealing pressure may be related to the area of ball surface 1730 (i.e., the area of annular seat 1550 in contact with ball 230) and the material of annular seat 1550. For example, a firmer material for annular seat 1550 may facilitate a greater sealing pressure on ball 230. According to an exemplary embodiment, first seal edge 1726 and second seal edge 1728 are configured to be beveled. However, first seal edge 1726 and second seal edge 1728 may be chamfered, filleted, or rounded.

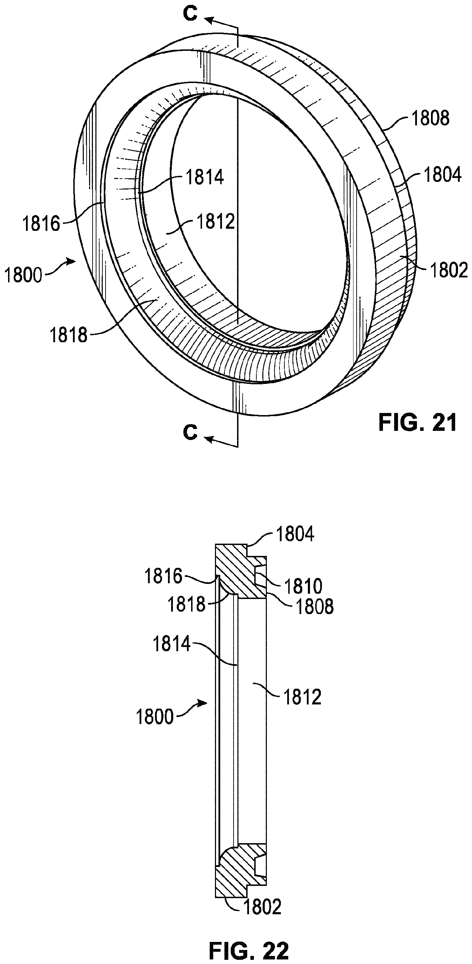

In FIGS. 16 and 20-22, valve assembly 100 includes a seat (e.g., seal, gasket, O-ring, etc.), shown as annular seat 1800. Annular seat 1800 is positioned between end portion 1520 and ball 230. Annular seat 1800 is configured to substantially prevent fluid flow from entering inner chamber 220. When fluid transfer through valve assembly 100 is enabled, annular seat 1800 is configured to cooperate with bore 240 to provide a fluid channel.

Referring specifically to FIG. 16, annular shoulder 1700 is configured to interface with annular seat 1800. The thickness of annular shoulder 1700 may, in part, define the ability of annular seat 1800 to prevent leakage of fluid into inner chamber 220. Annular seat 1800 is configured to provide a flexible interface between ball 230, end portion 1520, and annular shoulder 1700.

Annular seat 1800 includes a recess, shown as receiving recess 1804. Receiving recess 1804 is configured to receive a seal, shown as O-ring 1806. Receiving recess 1804 cooperates with first face 1702 and second face 1704 of annular shoulder 1700 to constrain O-ring 1806 between annular seat 1800 and annular shoulder 1700.

O-ring 1806 is configured to interface with end portion 1520, annular shoulder 1700, and annular seat 1800 to inhibit flow of fluid between ball 230 and end portion 1520 into inner chamber 220. According to various embodiments, O-ring 1806 is configured to be biased against annular shoulder 1700 by annular seat 1800 through an interaction with receiving recess 1804. In an exemplary operation, fluid flows through ball 230, over annular seat 1800, and over end portion 1520 when ball 230 is in the open position.

First face 1702 of annular shoulder 1700 interfaces with a first face of annular seat 1800, shown as seat face 1802. Annular seat 1800 also includes a second face, shown as second face 1808. Second face 1808 of annular seat 1800 interfaces with fourth face 1708 of annular shoulder 1700. According to various embodiments, annular seat 1800 includes an annular groove, shown as annular groove 1810. Annular groove 1810 is configured to receive annular projection 1710 of annular shoulder 1700. Annular projection 1710 and annular groove 1810 may cooperate to maintain a position (e.g., resist movement, etc.) of annular seat 1800 relative to annular shoulder 1700. Annular groove 1810 may be shaped in various configurations to substantially match annular projection 1710.

In some alternative applications, annular seat 1800 includes protrusions (e.g., protuberances, ribs, ridges, features, etc.) that are configured to interface with annular shoulder 1700 to maintain a position (e.g., resist movement, etc.) of annular seat 1800. These protrusions may be configured to be received in corresponding recessions in annular shoulder 1700. Similarly, annular shoulder 1700 may include protrusions (e.g., protuberances, ribs, ridges, features, etc.) that are configured to be received in recessions in annular seat 1800. Alternatively, annular seat 1800 may be adhesively attached to annular shoulder 1700.

Annular seat 1800 further includes a third face, shown as inner surface 1812. Inner surface 1812 interfaces with fluid in valve assembly 100. According to various embodiments, annular seat 1800 includes a first protrusion (e.g., protuberance, etc.), shown as first seal edge 1814, a second protrusion (e.g., protuberance, etc.), shown as second seal edge 1816, and a surface therebetween, shown as ball surface 1818. Ball surface 1818 interfaces with ball 230. For example, as ball 230 rotates, ball 230 slides along ball surface 1818.

In operation, ball 230 may contact first seal edge 1814, second seal edge 1816, and ball surface 1818. First seal edge 1814 and second seal edge 1826 may provide a seal with ball 230 and end portion 1520 such that fluid does not pass between first seal edge 1814 or second seal edge 1816 and ball 230. Ball surface 1818 is configured to interface with ball 230 along various points of ball surface 1818 as ball 230 is rotated. For example, ball surface 1818 may provide a seal with ball 230 such that fluid does not pass between ball surface 1818 and ball 230.

First seal edge 1814 and second seal edge 1816 may provide increased structural integrity to annular seat 1800. According to an exemplary embodiment, annular seat 1800 is configured to provide a sealing pressure on ball 230. The sealing pressure may be related to the area of ball surface 1818 (i.e., the area of annular seat 1800 in contact with ball 230) and the material of annular seat 1800. For example, a firmer material for annular seat 1800 may facilitate a greater sealing pressure on ball 230. According to an exemplary embodiment, first seal edge 1814 and second seal edge 1816 are configured to be beveled. However, first seal edge 1814 and second seal edge 1816 may be chamfered, filleted, or rounded.

As shown in FIG. 16, annular shoulder 1700 includes a surface, shown as coupling surface 1820. Coupling surface 1820 is configured to interface with coupling 300. According to an exemplary embodiment, coupling 300 includes a recess, shown as coupling recess 1822. Coupling recess 1822 is configured to receive a seal, shown as O-ring 1824. O-ring 1824 is configured to provide a seal between coupling 300 and coupling surface 1800 of annular shoulder 1700.

Annular seat 1550, annular seat 1800, and annular shoulder 1700 may further include a protrusion (e.g., protuberance, etc.), such as a rotational lock similar to rotational lock 700. The rotational lock may interact with a recess in either annular seat 1550 and/or annular seat 1800, or annular shoulder 1700 to inhibit rotation of annular seat 1550 and/or annular seat 1800. In other applications annular seat 1550, annular seat 1800, and/or annular shoulder 1700 may include a depression, such as a depression similar to depression 800. The depression may be configured to assist in inhibiting rotation of annular seat 1550 and/or annular seat 1800.

Body 1500 may be coupled to various pipes, fittings, hoses, gauges, and other components in a fluid transfer assembly. For example, body 1500 may be placed between two fluid transfer pipes and configured to selectively control the flow of fluid from one fluid transfer pipe to another fluid transfer pipe. Accordingly, body 1500 may be altered and reconfigured depending on the fluid transfer assembly. Body 1500, including main body 1510 and end portions 1520, may be constructed from various materials such as brass, aluminum, stainless steel, plastic, polymers, metallic alloys, and other suitable materials. Main body 1510 and end portions 1520 may be joined through the use of fasteners, adhesives, or through the use of a permanent bonding method such as welding, riveting, and fusing. Annular shoulder 1700 may be constructed to be structurally integrated with end portion 1520 or may be attached to end portion 1520 through any of the methods and mechanisms previously mentioned.

Annular seat 1520, O-ring 1716, annular seat 1800, O-ring 1806, and O-ring 1824 may be constructed from various materials suitable for use in a fluid transfer assembly. For example, annular seat 1520, O-ring 1716, annular seat 1800, O-ring 1806, and O-ring 1824 may be constructed from butadiene rubber, butyl rubber, fluoroelastomer, nitrile rubber, silicon rubber, thermoplastics, synthetic rubbers, and other similar materials. In an alternative embodiment, annular seat 1520, O-ring 1716, annular seat 1800, O-ring 1806, and O-ring 1824 are structurally integrated forming a single seal performing the various functions of annular seat 1520, O-ring 1716, annular seat 1800, O-ring 1806, and O-ring 1824. In another alternative embodiment, any combination of annular seat 1520, O-ring 1716, annular seat 1800, O-ring 1806, and O-ring 1824 may be structurally integrated. For example, O-ring 1716 may be structurally integrated within annular seat 1520. As described herein, structurally integrated indicates that two otherwise separate components, features, or structures are formed in, or otherwise caused to be, a single component, feature, or structure. For example, structural integration may be achieved through various molding processes (e.g., injection molding, extrusion molding, pressure molding, transfer molding, etc.).

It is understood that any of annular seat 1520, O-ring 1716, annular seat 1800, O-ring 1806, and O-ring 1824 may be compressible (e.g., configured to be compressed). In this way, compression of annular seat 1520, O-ring 1716, annular seat 1800, O-ring 1806, and O-ring 1824 may enhance the ability of annular seat 1520, O-ring 1716, annular seat 1800, O-ring 1806, and O-ring 1824 to inhibit undesirable fluid flow (e.g., to inner chamber 220, etc.).

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A valve assembly, comprising:
- a body including an inlet, an outlet, and an inner chamber;
- a ball positioned within the inner chamber and including a bore extending through the ball such that the ball is movable from a closed position, where the ball prevents fluid flow from flowing between the inlet and the outlet, and an open position, where the ball enables fluid flow between the inlet and the outlet;
- a first seating assembly positioned adjacent the inlet and including:
- a first annular seal; and
- a first annular retaining member including a first outer retaining ring positioned adjacent a first shoulder of the body and a first inner surface defining a first portion of a flow path for fluid flowing between the inlet and the outlet;
- a second seating assembly positioned adjacent the outlet and including:
- a second annular seal; and
- a second annular retaining member including a second outer retaining ring positioned adjacent a second shoulder of the body and a second inner surface defining a second portion of the flow path for fluid flowing between the inlet and the outlet.

2. The valve assembly of claim 1,
wherein the first shoulder is positioned upstream from the first outer retaining ring and wherein the second shoulder is positioned downstream from the second outer retaining ring.

3. The valve assembly of claim 1 or 2,
wherein the first inner surface includes a first generally cylindrical portion being coaxial with the bore and wherein the second inner surface includes a second generally cylindrical portion being coaxial with the first generally cylindrical portion and the bore.

4. The valve assembly of claim 3,
wherein the first inner surface includes tapered portions extending from both ends of the first generally cylindrical portion, and wherein the second inner surface includes tapered portions extending from both ends of the second generally cylindrical portion.

5. The valve assembly of one of claims 1 to 4,
wherein the first outer retaining ring and the body at least partially define an annular space within which the first annular seal is positioned, and wherein the second outer retaining ring and the body at least partially define a second annular space within which the second annular seal is received.

6. The valve assembly of one of claims 1 to 5,
wherein the first annular retaining member is configured to prevent extrusion of the first annular seal into a flow path for the fluid, and wherein the second annular retaining member is configured to prevent extrusion of the second annular seal into the flow path for the fluid.

7. The valve assembly of one of claims 1 to 6,
wherein the first annular retaining member and the first outer ring intersect to form a first generally T-shaped cross-section, and wherein the second annular retaining member and the second outer ring intersect to form a second generally T-shaped structure.

8. The valve assembly of one of claims 1 to 7,
wherein at least a portion of the first outer retaining ring is positioned between the first shoulder and the first annular seal, and wherein at least a portion of the second outer ring is positioned between the second shoulder and the second annular seal.

9. The valve assembly of one of claims 1 to 8,
wherein the first inner surface and the second inner surface are substantially aligned.

10. The valve assembly of one of claims 1 to 9,
wherein the first annular seal and the second annular seal are formed of a resilient material and configured to form seals with the ball.

11. The valve assembly of one of claims 1 to 10,
wherein the first annular seal comprises a first annular recess adjacent the first shoulder; and
wherein the second annular seal comprises a second annular recess adjacent the second shoulder.

12. The valve assembly of claim 11, further comprising:
- a first O-ring positioned within the first annular recess; and
- a second O-ring positioned within the second annular recess.

13. The valve assembly of one of claims 1 to 12,
wherein the first annular retaining member comprises a first projection; wherein the first shoulder comprises a first recess configured to receive the first projection; and
wherein the first projection and the first recess cooperate to prevent rotation of the first annular retaining member relative to the first shoulder.

14. The valve assembly of claim 13,
wherein the second annular retaining member comprises a second projection;
wherein the second shoulder comprises a second recess configured to receive the second projection; and
wherein the second projection and the second recess cooperate to prevent rotation of the second annular retaining member relative to the second shoulder.

15. The valve assembly of claim 13 or 14,
wherein the first annular seal is identical to the second annular seal; and wherein the first annular retaining member is identical to the second annular retaining member.
